# EUROPÄISCHE PATENTANMELDUNG

(11) **EP 1 544 534 A2**
(43) Veröffentlichungstag der Anmeldung: **22.06.2005**
(21) Anmeldenummer: 04029798.8
(22) Anmeldetag: 15.12.2004
(51) Int. Cl.: F16P 3/00

(54) **Verfahren zur Steuerung eines Antriebs trennender Schutzeinrichtungen**

(30) Priorität: 18.12.2003 DE 10359685
(71) Anmelder: HEINRICHS & Co. GmbH, 55218 Ingelheim (DE)
(72) Erfinder: Arndt, Holger, Dr., 65187 Wiesbaden (DE)
(74) Vertreter: Müller, Gerald Christian

(57) **Zusammenfassung**

Die Erfindung betrifft ein Verfahren zur Steuerung des Antriebs motorisch betriebener, trennender Schutzeinrichtungen (1), umfassend den Schritt des Beschleunigens oder Verzögerns eines trennenden Elements (4) auf eine vorbestimmte Geschwindigkeit, wobei zumindest während der Schließbewegung des trennenden Elements (4) ein für das Ist-Moment des Antriebs (5) repräsentativer Parameter erfasst und überwacht wird und der Antrieb (5) bei einem durch das Ausbrechen des Parameterwerts aus einem vorgegebenen Wertebereich definierten Störfall von seiner Energieversorgung abgekoppelt wird. Gemäß eines weiteren Aspekts der Erfindung wird abhängig davon, ob es beim Schließen der Schutzeinrichtung zu einem Störfall gekommen ist, ein vorgegebener Wert in einer Speichervorrichtung zwischengespeichert wird und ausgehend von diesem Wert das Verfahren bestimmt wird, mit dem der auf das Schließen folgende Öffnungsvorgang der Schutzeinrichtung durchgeführt wird.

## Beschreibung

### I. Anwendungsgebiet

Die Erfindung betrifft ein Verfahren zur Steuerung eines Antriebs trennender Schutzeinrichtungen. Sicherheitstechnische bzw. trennende Schutzeinrichtungen, beispielsweise in Form von bewegten Schutzfenstern, Rolltoren oder ähnlichem, finden überall dort ihren Einsatz, wo es der Personen- und/oder Anlagenschutz nahelegen bzw. fordern. Beispielsweise werden Personen beim Zuführen und Entnehmen von Teilen an Maschinen und Anlagen durch trennende Schutzeinrichtungen zuverlässig geschützt. Die Personen werden dabei nicht nur vor Verletzungen durch unbefugten Zugang oder Durchgreifen wirksam geschützt, sondern auch vor Funkenflug, Schweißspritzern, Staub, Lärm oder ähnlichem bewahrt.

### II. Technischer Hintergrund

Trennende Schutzeinrichtungen der oben genannten Art werden üblicherweise motorisch, vorzugsweise unter Verwendung von Elektromotoren, betrieben. Um möglichst geringe Stillstandszeiten der Produktionsanlage erreichen zu können, muss die Bewegung des trennenden Elements der Schutzeinrichtung von der geöffneten Stellung in die geschlossene Stellung und umgekehrt möglichst schnell ablaufen. Gleichzeitig muss jedoch unter anderem auf Grund entsprechender Sicherheitsvorschriften gewährleistet werden, dass die Schutzeinrichtung beim Schließen ein sich in dem Weg des trennenden Elements befindliches Hindernis, beispielsweise in Form einer Person, eines Werkzeugs o. ä., hinreichend schnell erkennt, und es müssen entsprechende Maßnahmen getroffen werden, damit der in diesem Fall sich ergebende Aufprall auf das Hindernis zu einer möglichst geringen, unterhalb der entsprechenden Grenzwerte liegenden Stoß- bzw. Krafteinwirkung führt. Dies ist insbesondere für den Personenschutz von großer Bedeutung, da die entsprechenden trennenden Elemente üblicherweise Gewichte in der Größenordnung von bis zu mehreren 100 Kilogramm aufweisen können.

Um beim Eindringen eines Hindernisses in die Bahn des trennenden Elements dieses beim Aufprall sofort abzubremsen werden üblicherweise mechanische Sicherheitssysteme verwendet. Beispielsweise kann gemäß DE 38 27 909 A1 eine mit Hebeln verbundene Sicherheitsschaltleiste am unteren Ende des trennenden Elements vorgesehen sein, wobei die Hebel beim Auftreffen der Schaltleiste auf das Hindernis sofort in seitlich an der Schutzeinrichtung ortsfest angeordnete Zahnleisten eingreifen.

Ein derartiges mechanisches Sicherheitssystem führt zu einem sofortigen Stopp der Schließbewegung des trennenden Elements, ohne dabei jedoch auf dessen Antrieb einzuwirken. Folglich versucht der Antrieb auch bei Vorliegen eines durch ein Hindernis verursachten Abbremsens bzw. Stillstehens des trennenden Elements weiterhin, dieses anzutreiben. Dies bringt insbesondere bei der bei Schutzfenstern der in Rede stehenden Art an sich bekannten Verwendung von Drehstrom-Asynchronmotoren zwei erhebliche Nachteile mit sich. Zum einen gibt ein derartiger Motor auf Grund seiner Kennlinie bei einer sich verringernden Drehzahl ein erhöhtes Drehmoment ab, das das Soll-Drehmoment durchaus um den Faktor zwei bis drei übertreffen kann. Folglich wird die Anschlagkante des trennenden Elements noch einmal mit erhöhter Kraft in Schließrichtung nachgedrückt. Dies kann zu erheblichen Komplikationen führen, da gegebenenfalls auf die sich im Öffnungsbereich der Schutzeinrichtung befindliche Person nach dem Aufprall noch einmal eine große Krafteinwirkung stattfindet. Zum anderen sind die vorteilhafterweise verwendeten Elektromotoren üblicherweise nicht auf einen Stillstandbetrieb ausgelegt, so dass es aufgrund der erhöhten Wärmeentwicklung zu einem Durchbrennen der Motoren kommt.

Um diese Probleme zu lösen, gibt es im Stand der Technik verschiedene Lösungsansätze. Alle diese Lösungsansätze weisen jedoch spezifische Nachteile auf. Beispielsweise kann zwischen den Antrieb und das trennende Element eine mechanische Kupplung eingebaut werden, die dafür sorgt, dass der Antrieb bei einem Stopp des trennenden Elements nicht zum Stillstand kommt, sondern weiterlaufen kann. Hier bieten sich insbesondere Rutschkupplungen oder hydraulische Kupplungen an. Die Verwendung derartiger Kupplungen ist jedoch mit einem erhöhten Konstruktionsaufwand und entsprechenden Kosten verbunden.

Alternativ kann auch ein spezieller Motor verwendet werden, der im Stillstand dauerhaft betrieben werden kann, ohne durchzubrennen. Hier kommt beispielsweise ein so genannter Drehfeldmagnetmotor in Frage, der auf Grund seiner Kennlinie über die gewünschten Eigenschaften verfügt. Diese Motoren sind jedoch in ihrer Leistungsdichte begrenzt, weisen einen geringen Wirkungsgrad auf und sind darüber hinaus sehr empfindlich gegenüber Schwankungen im Stromnetz. Darüber hinaus ist eine verhältnismäßig groß ausgelegte Bremse erforderlich.

### III. Darstellung der Erfindung

### a) Technische Aufgabe

Die vorliegende Erfindung hat folglich die Aufgabe, ein Verfahren zur Steuerung des Antriebs einer trennenden Schutzeinrichtung zu schaffen, welches die Eigenschaften der Schutzeinrichtung bei einem Störfall sicherheitstechnisch verbessert und gleichzeitig gewährleistet, dass der Antrieb der Schutzeinrichtung über genügend Leistung verfügt, ohne bei einem Störfall zu Schaden zu kommen.

### b) Lösung der Aufgabe

Diese Aufgabe wird durch ein Verfahren mit den Merkmalen des Anspruches 1 gelöst. Vorteilhafte Ausführungsformen ergeben sich aus den Unteransprüchen.

Erfindungsgemäß ist ein Verfahren zur Steuerung des Antriebs von motorisch betriebenen, trennenden Schutzeinrichtungen vorgesehen, bei dem das trennende Element der Schutzeinrichtung zunächst aus der geöffneten Stellung auf eine vorbestimmte Schließgeschwindigkeit beschleunigt wird. Daraufhin bewegt sich das trennende Element vorzugsweise mit im Wesentlichen gleichmäßiger Schließgeschwindigkeit durch ihren Öffnungsbereich und wird beim Annähern an seine vollständig geschlossene Stellung durch eine vorzugsweise im Antrieb integrierte Betriebsbremse abgebremst. Der Kern der Erfindung ist hierbei darin zu sehen, dass zumindest während der Schließbewegung des trennenden Elements ein für das Ist-Moment des Antriebs repräsentativer Parameter erfasst sowie überwacht wird und der Antrieb beim Ausbrechen des Parameterwerts aus einem vorgegebenen Wertebereich von seiner Energieversorgung abgekoppelt bzw. letztere unterbrochen wird. Da beim Auftreffen des trennenden Elements auf ein Hindernis der Antrieb versucht, den auf dem Hindernis beruhenden, zusätzlichen Widerstand zu überwinden und demzufolge ein höheres Drehmoment entwickelt, wird folglich durch eine Überwachung eines das Drehmoment widerspiegelnden Parameters sichergestellt, dass eine Störung der Schließbewegung des trennenden Elements der Schutzeinrichtung unmittelbar erkannt wird. Hierbei ist es unerheblich, ob der zu überwindende Widerstand alleine auf dem Hindernis oder auf einem zusätzlichen mechanischen Sicherheitssystem beruht.

Indem der Antrieb als Folge des Ausbrechens des überwachten Parameters aus einem vorbestimmten Wertebereich ohne wesentliche Verzögerung von seiner Energieversorgung abgekoppelt wird, kann vermieden werden, dass der Antrieb kurzzeitig ein erheblich höheres Moment als sein Soll-Moment entwickelt. Auf diese Weise können ein "Nachdrücken" des Antriebs auf das Hindernis und somit gegebenenfalls Verletzungen einer eingeklemmten Person verhindert werden. Auch ist bei einem Abkoppeln des Antriebs von seiner Energieversorgung ein Durchbrennen des Antriebs ausgeschlossen.

Gemäß eines weiteren Aspekts des erfindungsgemäßen Verfahrens ist auch eine Reaktion der Steuerung des Antriebs vorgesehen, falls nach einer festgesetzten Zeit der Schließvorgang nicht als vollständig abgeschlossen erkannt wird, was ebenfalls ein Anzeichen für einen Störfall beim Schließen der Schutzeinrichtung sein kann. Zum Erkennen des vollständigen Schließens können hier übliche Endanschlagschalter oder sonstige Sensoren verwendet werden. Als Reaktion kann hier beispielsweise ebenfalls ein Abkoppeln des Antriebs von seiner Energieversorgung erfolgen. Allerdings wäre es auch denkbar, als Reaktion eine Umsteuerung vorzunehmen, d.h. vom Schließvorgang der Schutzeinrichtung in einen Öffnungsvorgang derselben überzugehen.

Wird im Folgenden daher von einem Störfall beim Schließvorgang- der Schutzeinrichtung gesprochen, so umfasst dieser Begriff sowohl ein Ausbrechen des Parameterwerts aus dem vorgegebenen Wertebereich, als auch ein Ausbleiben des vollständigen Schließens der Schutzvorrichtung nach einer festgesetzten Zeit

Vorteilhafterweise wird erfindungsgemäß die normalerweise zum Abbremsen des trennenden Elements der Schutzeinrichtung beim Annähern an die geschlossene Stellung verwendete Betriebsbremse beim Abkoppeln des Antriebs von seiner Energieversorgung in ihrer geöffneten Stellung gehalten. Auf diese Weise kann in Verbindung mit einem entsprechenden System aus Gegengewichten sichergestellt werden, dass das abgestoppte trennende Element ohne nennenswerten Widerstand, und somit beispielsweise von Hand, in seine Öffnungsrichtung verschoben werden kann. Würde die Betriebsbremse beim Vorliegen eines Störfalls in ihre Eingriffsstellung gebracht werden, so könnte das trennende Element, wenn überhaupt, nur über einen erheblichen Widerstand hinweg in seine Öffnungsrichtung verschoben werden. Dies ist insbesondere von Bedeutung, falls bei einem Störfall ein möglichst schnelles Befreien einer eingeklemmten Person notwendig sein sollte.

Bei einer bevorzugten Ausführungsform des erfindungsgemäßen Verfahrens wird abhängig davon, ob es beim Schließen der Schutzeinrichtung zu einem Störfall gekommen ist oder nicht, ein Zustandswert, der die Information enthält, ob ein Störfall stattgefunden hat oder nicht, in einer Speichervorrichtung zwischengespeichert. Ausgehend von diesem Zustandswert wird dann das Verfahren bestimmt, mit dem der auf das Schließen folgende Öffnungsvorgang der Schutzeinrichtung durchgeführt wird. Darüber hinaus kann der Zustandswert auch eine Information darüber enthalten, welche Art von Störfall - Ausbrechen des Parameterwerts oder Ausbleiben des vollständigen Schließens nach festgesetzter Zeit - enthalten. In diesem Fall kann das Verfahren des auf die Schließbewegung folgenden Öffnungsvorgangs bei Bedarf störfallartabhängig ermittelt werden.

Falls es beim Schließen der Schutzvorrichtung zu keinem Störfall kam, so ist bei dieser Ausführungsform beispielsweise denkbar, dass bei dem auf das Schließen folgenden Öffnungsvorgang der Schutzeinrichtung das trennende Element aus der geschlossenen Stellung auf eine vorbestimmte erste Öffnungsgeschwindigkeit gebracht wird, dann vorzugsweise mit im Wesentlichen gleichmäßiger Geschwindigkeit den Öffnungsbereich durchläuft und beim Annähern an die vollständig offene Stellung abgebremst wird, wobei die Öffnungsgeschwindigkeit hierbei vorzugsweise so hoch wie möglich gewählt wird und keine Überwachung des Ist-Moments des Antriebs erfolgt.

Kam es beim Schließen der Schutzvorrichtung jedoch zu einem Störfall, so umfasst der auf das Schließen folgende Öffnungsvorgang der Schutzeinrichtung zwar ebenfalls die oben genannten Schritte des Beschleunigens, vorzugsweise der gleichmäßigen Bewegung sowie des Abbremsens des trennenden Elements. Allerdings wird das trennende Element in diesem Fall auf eine vorbestimmte zweite Öffnungsgeschwindigkeit beschleunigt, die vorzugsweise geringer ist als die erste Öffnungsgeschwindigkeit und insbesondere auch geringer als die Schließgeschwindigkeit ist. Auch wird hier in im Wesentlichen analoger Weise wie beim Schließvorgang ein für das Ist-Moment des Antriebs repräsentativer Parameter erfasst und überwacht, wobei ein Abkoppeln des Antriebs von seiner Energieversorgung erfolgt, falls der Wert des überwachten Parameters aus einem vorgegebenen Wertebereich ausbricht.

Auf diese Weise kann sichergestellt werden, dass die Schutzeinrichtung sich nur dann öffnet bzw. das trennende Element in Bewegung versetzt wird, wenn keine zusätzlichen Widerstände als die im normalen Betrieb vorhandenen, mechanisch bedingten Widerstände vorliegen. Folglich kann eine Beeinträchtigung oder gar Verletzung einer sich mit dem trennenden Element aufgrund des beim vorausgehenden Schließen aufgetretenen Störfalls in Kontakt befindenden Person ausgeschlossen werden.

Alternativ kann bei dem nach einem Störfall stattfindenden Öffnungsvorgang auch eine fest vorgegebene Begrenzung des Moments des Antriebs erfolgen, so dass keine Überwachung des Ist-Moments notwendig ist. Da vorzugsweise das vorgegebene Maximalmoment so gewählt wird, dass das trennende Element bei Vorliegen von Widerständen, die zusätzlich zu den im normalen Betrieb vorhandenen, mechanisch bedingten Widerständen auftreten, nicht bewegt wird, wird sichergestellt, dass auch in diesem Fall keine Beeinträchtigung oder gar Verletzung einer sich mit dem trennenden Element aufgrund des beim vorausgehenden Schließen aufgetretenen Störfalls in Kontakt befindenden Person auftreten kann.

Gleichzeitig ist erfindungsgemäß beim Öffnungsvorgang nach einem Störfall vorzugsweise auch eine Reaktion der Steuerung des Antriebs vorgesehen, falls nach einer festgesetzten Zeit der Öffnungsvorgang nicht als vollständig abgeschlossen erkannt wird. Dies kann beispielsweise passieren, wenn das trennende Element an dem den Störfall beim Schließen auslösenden Objekt festhängt, so dass es sich nicht bewegt. In diesem Fall wird der Antrieb nach Ablauf der festgesetzten Zeit von seiner Energieversorgung abgekoppelt. Vorteilhafterweise kann die für den Öffnungsvorgang nach einem Störfall festgesetzte Zeit größer gewählt werden als die für den Schließvorgang festgesetzte Zeit.

Sollte der auf einen mit einem Störfall behafteten Schließvorgang folgende Öffnungsvorgang jedoch innerhalb der vorgegebenen Zeit beendet werden, so wird der beim Schließvorgang gespeicherte Zustandswert auf seinen ursprünglichen Wert zurückgesetzt, um sicherzustellen, dass die gegebenenfalls folgenden Öffnungsvorgänge jeweils nur von dem unmittelbar vorausgehenden Schließvorgang beeinflusst werden.

Der jeweils verwendete Wertebereich für den Parameterwert kann vorteilhafterweise in Abhängigkeit von dem jeweiligen Bewegungszustand des trennenden Elements der Schutzeinrichtung, also Öffnen, Schließen, Beschleunigen, gleichmäßige Bewegung oder Abbremsen, gewählt werden. Insbesondere können für das Beschleunigen und Abbremsen des trennenden Elements sich an aktuell gegebene und sich zeitlich ändernde Soll-Werte des Parameters des Antriebs anpassende Wertebereiche gewählt werden.

Besonders bevorzugt kann der Wertebereich für den Parameterwert durch eine relative Abweichung von einem Soll-Wert definiert sein, wobei sich auch dieser Soll-Wert abhängig vom jeweiligen Betriebszustand der Schutzeinrichtung verändern kann.

Gemäß dem erfindungsgemäßen Verfahren erfolgt das Beschleunigen des trennenden Elements vorzugsweise durch eine im Wesentlichen lineare Veränderung der Geschwindigkeit. Dies kann beispielsweise mittels einer Rampenfunktion in der Steuerung des Antriebs realisiert werden, wobei hier sowohl stetige als auch unstetige Übergänge verwendet werden können.

Eine bevorzugte Ausführungsform des erfindungsgemäßen Verfahrens zeichnet sich dadurch aus, dass der Antrieb der Schutzeinrichtung durch einen Elektromotor erfolgt. Hier kommt insbesondere ein Drehstrom-Asynchronmotor in Betracht, wobei jedoch auch andere Motoren, wie beispielsweise ein Gleichstrommotor, ein Drehfeldmagnetmotor, ein Servomotor o. ä. denkbar sind.

Um eine für das erfindungsgemäße Verfahren vorteilhafte Regelung und Steuerung des vorzugsweise verwendeten Drehstrom-Asynchronmotors oder Servomotors zu erreichen, wird dieser vorzugsweise in Kombination mit einem Frequenzumrichter verwendet. Hierbei können sowohl der Drehstrom-Asynchronmotor als auch der Frequenzumrichter oder auch beide Bauteile über eine übergeordnete Steuervorrichtung gesteuert werden. Als Steuervorrichtungen kommen alle üblichen Steuer- bzw. Regelsysteme in Betracht, wobei diese vorzugsweise eine Schnittstelle an die üblicherweise industriell verwendeten Bussysteme wie Interbus oder ähnliches aufweisen.

Im Falle der Verwendung eines Elektromotors als Antrieb der Schutzeinrichtung bietet sich als zu überwachender Parameter die Ist-Leistungsaufnahme des Motors an, wobei diese vorzugsweise durch eine Erfassung der Stärke des aktuell in dem Motor fließenden Stroms mittelbar gemessen werden kann. Selbstverständlich kann jedoch der relevante Parameter auch auf andere mittelbare oder unmittelbare Arten, beispielsweise durch eine direkte Messung des Ist-Motormoments, erfasst werden.

Gemäß einer besonders vorteilhaften Ausführung des erfindungsgemäßen Verfahrens kann der zu überwachende Parameter in Form des dem Motor zugeführten Stroms direkt in dem Frequenzumrichter erfasst werden.

Bei der Verwendung eines Elektromotors als Antrieb kann das Abkoppeln des Antriebs von der Energieversorgung vorteilhafterweise durch ein Stromlos-Schalten des Motors erfolgen. Hierbei kann die benötigte Stromsteuerung entweder direkt durch den vorzugsweise vorhandenen Frequenzumrichter oder in dem gegebenenfalls vorhandenen, übergeordneten Steuerungssystem erfolgen.

Die Schließgeschwindigkeit des trennenden Elements der Schutzeinrichtung liegt bei dem erfindungsgemäßen Verfahren vorzugsweise in einem Bereich von 0,5 m/s bis 1,5 m/s.

### c) Ausführungsbeispiele

Eine Ausführungsform gemäß der Erfindung ist im Folgenden anhand der Figuren beispielhaft näher beschrieben. Es zeigen:
- Fig. 1a:: eine Vorderansicht einer trennenden Schutzeinrichtung aus dem Stand der Technik in Form eines Schutzfensters;
- Fig. 1b:: eine Seitenschnittansicht eines Schutzfensters der in Fig. 1a dargestellten Art;
- Fig. 2:: ein Ablaufdiagramm eines Schließvorgangs einer trennenden Schutzeinrichtung gemäß einer bevorzugten Ausführungsform des erfindungsgemäßen Verfahrens und
- Fig. 3:: ein Ablaufdiagramm eines Öffnungsvorgangs einer trennenden Schutzeinrichtung gemäß einer bevorzugten Ausführungsform des erfindungsgemäßen Verfahrens.

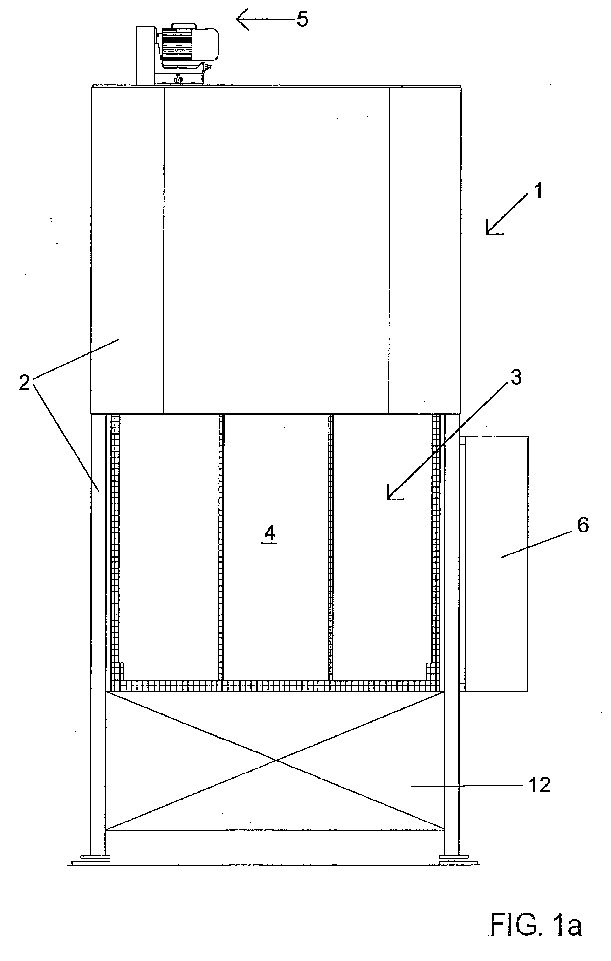

Bezugnehmend auf Figur 1a wird dort eine trennende Schutzeinrichtung gemäß dem Stand der Technik in Form eines Schutzfensters 1 dargestellt. Das Schutzfenster 1 umfasst ein festes Gestell 2 rnit einem Öffnungsbereich 3. Eine Schutzscheibe 4 als trennendes Element kann durch einen geeigneten Antrieb, hier in Form eines Drehstrom-Asynchronmotors 5, von einer in Fig. 1a dargestellten, geschlossenen Stellung, in der sie den Öffnungsbereich 3 des Schutzfensters 1 verschließt, nach oben in eine geöffnete, den Öffnungsbereich 3 freigebende Stellung bewegt werden. Als trennendes Element kann alternativ eine Rolltorschürze, insbesondere aus Aluminium, zum Einsatz kommen. Die Steuerung des Antriebs erfolgt über eine Steuereinrichtung 6. Unterhalb des Öffnungsbereichs 3 befindet sich ein Einlegeblech 12.

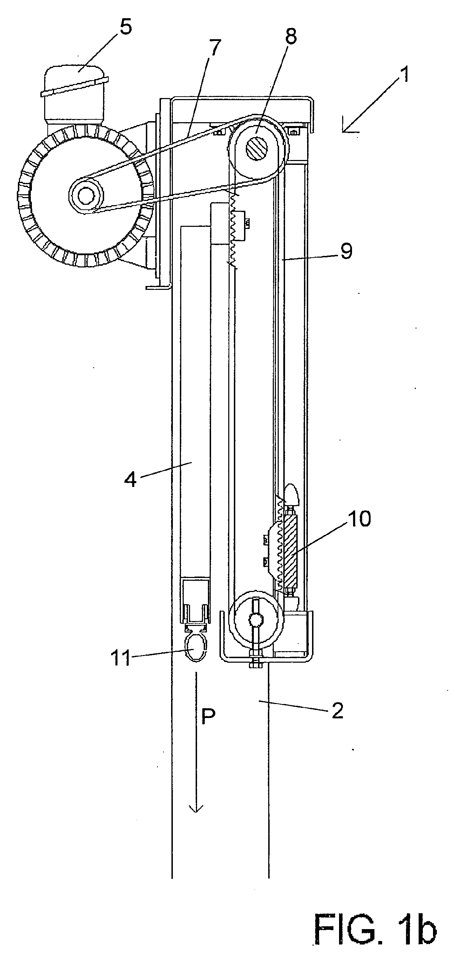

In Fig. 1b ist eine an sich bekannte Schutzeinrichtung in Form eines Schutzfensters 1 zu Verdeutlichung des Antriebsmechanismus in einer Seitenschnittansicht dargestellt. Die Schutzscheibe 4 befindet sich hier in der nach oben gezogenen, geöffneten Stellung.

Der Motor 5 treibt über einen Zahnriemen 7 ein Umlenkrad 8 an, das in einen zweiten Zahnriemen 9 eingreift. Mit dem Zahnriemen 9 fest verbunden sind die Schutzscheibe 4 sowie ein Gegengewicht 10. Auf diese Weise wird die rotative Antriebsbewegung des Motors 5 in eine lineare Bewegung der Schutzscheibe 4 in der durch den Pfeil P gekennzeichneten Richtung in Fig. 1b nach unten umgewandelt. Das in Fig. 1b dargestellte Schutzfenster 1 umfasst weiterhin eine Anschlagkante in Form eines Gummiwulstes 11.

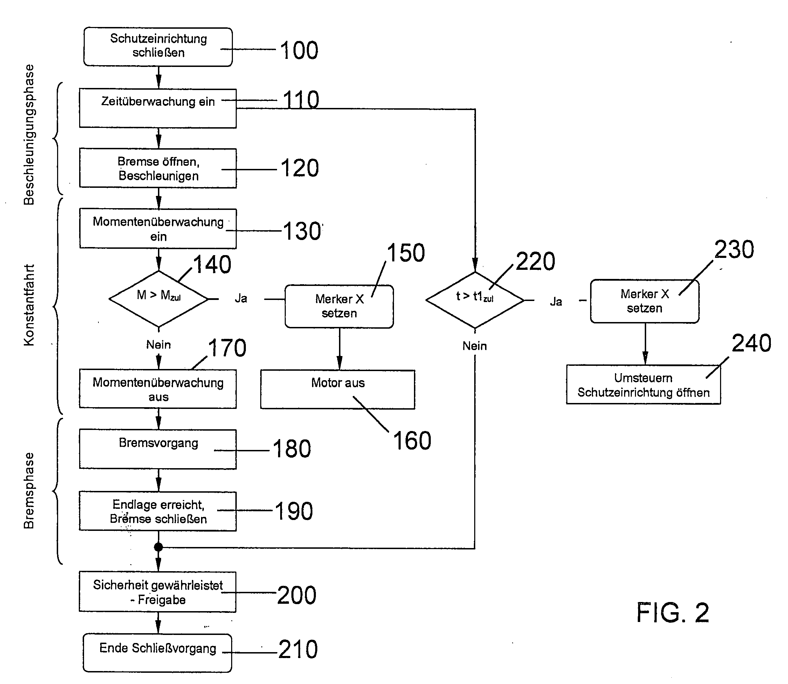

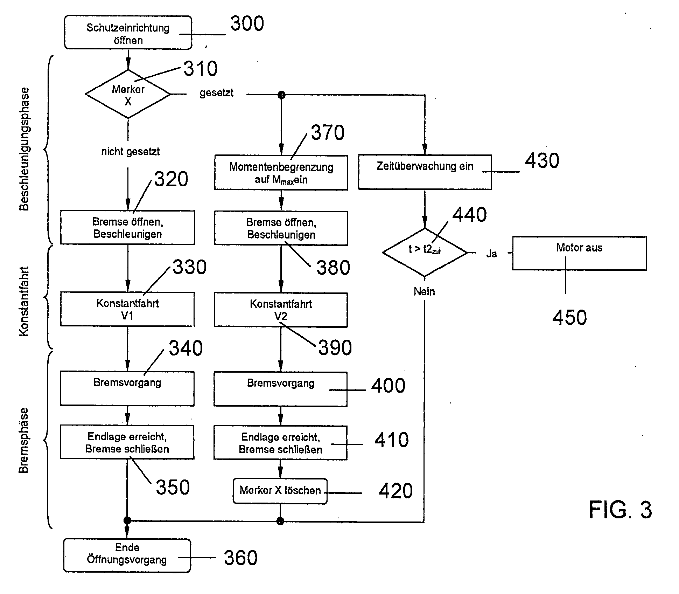

Das erfindungsgemäße Verfahren zur Steuerung des Antriebs des in Fig. 1a und 1b beispielhaft dargestellten Schutzfensters 1 gemäß dem Stand der Technik wird nachfolgend unter Bezugnahme auf die in den Figuren 2 und 3 dargestellten Ablaufdiagramme erläutert.

Das in Fig. 2 gezeigte Ablaufdiagramm bezieht sich auf einen Schließvorgang des Schutzfensters 1, der in Schritt 100 initialisiert wird. Bei der dargestellten bevorzugten Ausführungsform wird die Schutzscheibe 4 zwischen einer Beschleunigungsphase, in der in Schritt 110 die Zeitüberwachung des Schließvorgangs eingeschaltet und in Schritt 120 die Bremse gelöst sowie die Schutzscheibe 4 beschleunigt wird, und einer Bremsphase, in der die Schutzscheibe 4 in Schritt 180 abgebremst und in Schritt 190 bei Erreichen der Endlage die Bremse geschlossen wird, während einer so genannten Konstantfahrt mit im wesentlichen gleichmäßiger Geschwindigkeit über den größten Teil des Öffnungsbereichs 3 gefahren. Insbesondere beträgt im vorliegenden Beispiel der Bereich, in dem das Beschleunigen beziehungsweise das Abbremsen der Schutzscheibe 4 stattfindet, jeweils nur zirka zehn Zentimeter. Folglich findet bei dieser Ausführungsform die Momentenüberwachung nur während der Konstantfahrt der Schutzscheibe 4 statt, das heißt sie wird erst nach dem Beschleunigen der Schutzscheibe 4 in Schrift 130 eingeschaltet und vor dem Einleiten des Bremsvorgangs der Schutzscheibe 4 in Schritt 170 ausgeschaltet.

Ob das Ist-Moment M während der Konstantfahrt das vorgegebene zulässige Moment M_{zul} überschreitet, wird in Schritt 140 ermittelt. Wird das Moment M_{zul} nicht überschnitten, so wird ein Schließvorgang ohne Störfall durchgeführt, und die Schutzscheibe 4 wird beim Erreichen der Endlage der geschlossenen Stellung durch ein Schließen der im Motor 5 integrierten Betriebsbremse gemäß Schritt 190 gesichert und der Schließvorgang ist abgeschlossen. Daraufhin wird in Schritt 200 der Produktionsprozess, der hinter dem Schutzfenster 1 ablaufen soll, freigegeben und in Schritt 210 an die Produktionsprozesssteuerung gemeldet, dass der Schließvorgang beendet ist.

Die Betriebsbremse sichert die Schutzscheibe 4 auch im geöffneten Zustand, so dass während der Beschleunigungsphase in Schritt 120 die Bremse geöffnet wird, bevor ein Beschleunigen der Schutzscheibe 4 durch den Motor 5 stattfindet.

Wird in Schritt 140 festgestellt, dass das Ist-Moment M des Motors 5 das vorgegebene zulässige Moment M_{zul} während der Konstantfahrt der Schutzscheibe 4 überschreitet, so wird in Schritt 150 ein Merker X gesetzt und der Motor 5 in Schritt 160 von seiner Energieversorgung getrennt beziehungsweise ausgeschaltet.

Parallel zu der Überwachung des Ist-Moments M des Motors 5 findet in Schritt 220 im vorliegenden Fall auch eine Zeitüberwachung des Schließvorgangs des Schutzfensters 1 statt. Ist die Zeit t, die zwischen dem Beginn der Beschleunigung der Schutzscheibe 4 und deren Erreichen der Endlage verstreicht, kleiner als ein vorgegebener Wert t1_{zul}, so wird davon ausgegangen, dass beim Schließen des Schutzfensters 1 keine Probleme aufgetreten sind, vorausgesetzt natürlich, dass auch die Momentenüberwachung keinen Störfall signalisiert hat.

Wird während der Bewegung der Schutzscheibe 4 jedoch die zulässige Zeit t1_{zul} überschritten, so wird dies als Störfall gewertet und es wird zunächst wie bei einer Überschreitung des vorbestimmten Moments M_{zul} durch das Ist-Moment des Motors 5 in Schritt 230 ein Merker X gesetzt. Allerdings wird in diesem Fall bei der vorliegenden bevorzugten Ausführungsform des erfindungsgemäßen Verfahrens der Motor 5 nicht von seiner Energieversorgung abgekoppelt. Vielmehr wird der Antrieb in Schritt 240 umgesteuert, so dass ein Öffnungsvorgang des Schutzfensters 1 eingeleitet wird.

Fig. 3 zeigt ein Ablaufdiagramm eines Öffnungsvorgangs des Schutzfensters 1 gemäß des erfindungsgemäßen Verfahrens, der in Schritt 300 initialisiert wird. Auch der Öffnungsvorgang ist in eine Beschleunigungsphase, eine Konstantfahrt und eine Bremsphase unterteilt. Während der Konstantfahrt bewegt sich auch hier die Schutzscheibe 4 mit im Wesentlichen gleichmäßiger Geschwindigkeit.

Wie aus Fig. 3 ersichtlich, wird beim Öffnungsvorgang des Schutzfensters 1 zunächst in Schritt 310 überprüft, ob der Merker X in den Schritten 150 oder 230 gesetzt wurde oder nicht. Ist der Merker X nicht gesetzt, so wurde der vorausgehende Schließvorgang des Schutzfensters 1 folglich ohne Störfall abgeschlossen. In diesem Fall wird bei der vorliegenden Ausführungsform in Schritt 320 zunächst die Betriebsbremse geöffnet und dann die Schutzscheibe 4 auf die Geschwindigkeit V1 beschleunigt. Mit dieser Geschwindigkeit V1 bewegt sich die Schutzscheibe 4 während der Konstantfahrt gemäß Schritt 330 durch den größten Teil des Öffnungsbereichs 3, bevor sie in der Bremsphase in Schritt 340 abgebremst und bei Erreichen der Endlage der geöffneten Stellung in Schritt 350 durch ein Schließen der Betriebsbremse gesichert wird, woraufhin der Öffnungsvorgang des Schutzfensters 1 in Schritt 360 beendet wird und ein neuer Zyklus mit einem erneuten Schließvorgang eingeleitet werden kann.

Ist der Merker X in Schritt 150 oder 230 jedoch gesetzt worden, was gleichbedeutend damit ist, dass beim vorausgehenden Schließvorgang des Schutzfensters 1 ein Störfall aufgetreten ist, so wird vor dem in Schritt 380 erfolgenden Öffnen der Betriebsbremse und Beschleunigen der Schutzscheibe 4 in Schritt 370 eine Begrenzung des Moments des Motors 5 eingeschaltet. Dies hat zur Folge, dass der Motor 5 während des gesamten Öffnungsvorgangs des Schutzfensters 1 den durch die Momentenbegrenzung vorgegebenen Maximalwert Mₘₐₓ nicht überschreiten kann. Mₘₐₓ ist bei der vorliegenden Ausführungsform so gewählt, dass der Motor 5 bei der Bewegung der Schutzscheibe 4 lediglich die technisch bedingten bzw. auf Reibung beruhenden Widerstände überwinden kann.

Nach dem Einschalten der Momentenbegrenzung in Schritt 370 wird dann in Schritt 380 die Betriebsbremse geöffnet und die Schutzscheibe 4 auf die Geschwindigkeit V2 beschleunigt. Im vorliegenden Fall ist V2 aufgrund der Tatsache, dass im vorausgehenden Schließvorgang des Schutzfensters 1 ein Störfall aufgetreten war, deutlich geringer als V1 gewählt. An die in Schritt 390 stattfindende Konstantfahrt schließt sich in Schritt 400 ein Bremsvorgang an und die Schutzscheibe 4 wird beim Erreichen der Endlage der geöffneten Stellung durch ein Schließen der Betriebbremse in Schritt 410 gesichert. Anschließend wird in Schritt 420 der Merker X gelöscht, d.h. auf seinen Ausgangswert zurückgesetzt.

Parallel zu der Momentenbegrenzung wird bei gesetztem Merker X in Schritt 430 auch eine Zeitüberwachung des Öffnungsvorgangs des Schutzfensters 1 eingeschaltet. Ist in Schritt 440 die Zeit t, die zwischen dem Beginn der Beschleunigung der Schutzscheibe 4 und deren Erreichen der Endlage in der geöffneten Stellung verstreicht, kleiner als ein vorgegebener Wert t2_{zul}, so wird davon ausgegangen, dass das Öffnen des Schutzfensters 1 trotz Vorliegen eines Störfalls beim vorangehenden Schließvorgang korrekt durchgeführt wurde und es kann, gegebenenfalls nach einer weiteren, nicht näher beschriebenen Überprüfung des Öffnungsbereichs 3 des Schutzfensters 1, ein erneuter Schließvorgang eingeleitet werden.

Wird während der Bewegung der Schutzscheibe 4 während des Öffnens des Schutzfensters 1 jedoch die zulässige Zeit t2_{zul} überschritten, so wird der Motor 5 in Schritt 450 von seiner Energieversorgung abgekoppelt, da durch den Störfall beim vorausgehenden Schließvorgang des Schutzfensters 1 bedingt offensichtlich noch immer eine Beeinträchtigung der Bahn der Schutzscheibe 4 vorliegt.

Die beim Öffnungsvorgang des Schutzfensters 1 bei gesetztem Merker X verwendete zulässige Zeit t2_{zul} ist hierbei größer gewählt als die zulässige Zeit t1_{zul} beim Schließvorgang des Schutzfensters 1, da die Geschwindigkeit V2 der Schutzscheibe 4 während der Konstantfahrt gemäß Schritt 390 geringer ist als die gewählte Schließgeschwindigkeit der Schutzscheibe 4.

Im vorliegenden Fall erfolgt die Steuerung des Drehstrom-Asynchronmotors 5 durch einen nicht dargestellten Frequenzumrichter. Der das Ist-Moment M des Motors 5 wiedergebende Parameter ist die Ist-Stromaufnahme des Motors 5 und wird bei der vorliegenden bevorzugten Ausführungsform des erfindungsgemäßen Verfahrens im Frequenzumrichter erfasst. Auch die Überwachung des Parameters und das gegebenenfalls erfolgende Abkoppeln bzw. Abschalten des Motors 5 erfolgt in dem Frequenzumrichter. Die gesamte übergeordnete Steuerung des Schutzfensters 1 erfolgt über ein nicht weiter dargestelltes Steuerungssystem.

### BEZUGSZEICHENLISTE

- 1: Schutzfenster
- 2: Gestell
- 3: Öffnungsbereich
- 4: Schutzscheibe
- 5: Drehstrom-Asynchronmotor
- 6: Steuerung
- 7: Zahnriemen
- 8: Umlenkrad
- 9: Zahnriemen
- 10: Gegengewicht
- 11: Gummiwulst
- 12: Einlegeblech

- P: lineare Bewegungsrichtung
- X: Merker
- V1: Öffnungsgeschwindigkeit
- V2: Öffnungsgeschwindigkeit
- M: Ist-Moment
- M_{zul}: zulässiges Moment
- Mₘₐₓ: maximales Moment
- t: Zeit
- t1 _{zul}: zulässige Zeit beim Schließen
- t2_{zul}: zulässige Zeit beim Öffnen

## Patentansprüche

1. Verfahren zur Steuerung des Antriebs motorisch betriebener, trennender Schutzeinrichtungen (1), umfassend den Schritt des Beschleunigens oder Verzögerns eines trennenden Elements (4) auf eine vorbestimmte Geschwindigkeit,
**dadurch gekennzeichnet, dass**
zumindest während der Schließbewegung des trennenden Elements (4) ein für das Ist-Moment (M) des Antriebs (5) repräsentativer Parameter erfasst und überwacht wird und der Antrieb (5) bei einem durch das Ausbrechen des Parameterwerts aus einem vorgegebenen Wertebereich definierten Störfall von seiner Energieversorgung abgekoppelt wird.

2. Verfahren nach Anspruch 1,
**dadurch gekennzeichnet, dass**
der Antrieb (5) bei einem durch das Fehlen eines Erkennens der Vollständigkeit des Schließvorgangs nach einer festgesetzten Zeit (t1_{zul}) definierten Störfall von seiner Energieversorgung abgekoppelt wird.

3. Verfahren nach Anspruch 1 oder 2,
**dadurch gekennzeichnet, dass**
eine Betriebsbremse zum Abbremsen des trennenden Elements (4) bei nicht ausgebrochenem Parameterwert beim Abkoppeln des Antriebs (5) von seiner Energieversorgung in ihrer geöffneten Stellung gehalten wird.

4. Verfahren nach Anspruch 1 oder 3,
**dadurch gekennzeichnet, dass**
der Antrieb (5) bei einem durch das Fehlen eines Erkennens der Vollständigkeit des Schließvorgangs nach einer festgesetzten Zeit definierten Störfall umgesteuert wird, so dass ein Öffnungsvorgang der Schutzeinrichtung (1) eingeleitet wird.

5. Verfahren nach einem der vorangehenden Ansprüche,
**dadurch gekennzeichnet, dass**
abhängig davon, ob es beim Schließen der Schutzeinrichtung (1) zu einem Störfall gekommen ist, ein vorgegebener Zustandswert (X) in einer Speichervorrichtung zwischengespeichert wird und abhängig davon, ob dieser Zustandswert (X) gespeichert ist oder nicht, das Verfahren bestimmt wird, mit dem der auf das Schließen folgende Öffnungsvorgang der Schutzeinrichtung (1) durchgeführt wird.

6. Verfahren nach Anspruch 5,
**dadurch gekennzeichnet, dass**
der Zustandswert (X) und somit das Verfahren, mit dem der auf das Schließen folgende Öffnungsvorgang der Schutzeinrichtung (1) durchgeführt wird, von der Art des Störfalls abhängen.

7. Verfahren nach Anspruch 5 oder 6,
**dadurch gekennzeichnet, dass**
falls es beim Schließen der Schutzeinrichtung (1) zu keinem Störfall kommt, der auf das Schließen folgende Öffnungsvorgang der Schutzeinrichtung (1) folgende Schritte umfasst:
• Beschleunigen des trennenden Elements (4) aus der geschlossenen Stellung auf eine vorbestimmte erste Öffnungsgeschwindigkeit (V1),
• Abbremsen des trennenden Elements (4) durch eine im Antrieb integrierte Betriebsbremse beim Annähern an die vollständig geschlossene Stellung.

8. Verfahren nach einem der Ansprüche 5 bis 7,
**dadurch gekennzeichnet, dass**
falls es beim Schließen der Schutzeinrichtung (1) zu einem Störfall kommt, der auf das Schließen folgende Öffnungsvorgang der Schutzeinrichtung (1) folgende Schritte umfasst:
• Beschleunigen des trennenden Elements (4) aus der geschlossenen Stellung auf eine vorbestimmte zweite Öffnungsgeschwindigkeit (V2),
• Abbremsen des trennenden Elements (4) durch eine im Antrieb integrierte Betriebsbremse beim Annähern an die vollständig geschlossene Stellung,
wobei auch während der Öffnungsbewegung des trennenden Elements (4) ein für das Ist-Moment (M) des Antriebs (5) repräsentativer Parameter erfasst und überwacht wird und der Antrieb (5) beim Ausbrechen des Parameterwerts aus einem vorgegebenen Wertebereich von seiner Energieversorgung abgekoppelt wird.

9. Verfahren nach einem der Ansprüche 5 bis 7,
**dadurch gekennzeichnet, dass**
falls es beim Schließen der Schutzeinrichtung (1) zu einem Störfall kommt, der auf das Schließen folgende Öffnungsvorgang der Schutzeinrichtung (1) folgende Schritte umfasst:
• Beschleunigen des trennenden Elements (4) aus der geschlossenen Stellung auf eine vorbestimmte zweite Öffnungsgeschwindigkeit (V2),
• Abbremsen des trennenden Elements (4) durch eine im Antrieb integrierte Betriebsbremse beim Annähern an die vollständig geschlossene Stellung,
wobei während der Öffnungsbewegung des trennenden Elements (4) das Moment (M) des Antriebs (5) auf einen Maximalwert (Mₘₐₓ) begrenzt ist.

10. Verfahren nach einem der Ansprüche 8 oder 9,
**dadurch gekennzeichnet, dass**
der Antrieb (5) bei einem Fehlen eines Erkennens der Vollständigkeit des Öffnungsvorgangs nach einer festgesetzten Zeit (t2_{zul}) von seiner Energieversorgung abgekoppelt wird.

11. Verfahren nach einem der vorangehenden Ansprüche,
**dadurch gekennzeichnet, dass**
das trennende Element (4) zwischen dem Beschleunigen und dem Abbremsen über einen Teilbereich seiner Bahn mit im Wesentlichen gleichmäßiger Geschwindigkeit geführt wird.

12. Verfahren nach einem der vorangehenden Ansprüche,
**dadurch gekennzeichnet, dass**
der Wertebereich für den Parameterwert abhängig vom jeweiligen Bewegungszustand (Öffnen, Schließen, Beschleunigen, gleichmäßige Bewegung, Abbremsen) des trennenden Elements (4) ist.

13. Verfahren nach einem der vorangehenden Ansprüche,
**dadurch gekennzeichnet, dass**
der Wertebereich für den Parameterwert durch eine relative Abweichung von einem Soll-Wert des Parameters definiert wird.

14. Verfahren nach einem der Ansprüche 5 bis 13,
**dadurch gekennzeichnet, dass**
die erste Öffnungsgeschwindigkeit (V1) größer als die zweife Öffnungsgeschwindigkeit (V2) gewählt wird.

15. Verfahren nach einem der Ansprüche 5 bis 14
**dadurch gekennzeichnet, dass**
die erste Öffnungsgeschwindigkeit (V1) größer als die Schließgeschwindigkeit gewählt wird.

16. Verfahren nach einem der vorangehenden Ansprüche,
**dadurch gekennzeichnet, dass**
das Beschleunigen des trennenden Elements (4) durch eine im Wesentlichen lineare Veränderung der Geschwindigkeit erfolgt.

17. Verfahren nach einem der vorangehenden Ansprüche,
**dadurch gekennzeichnet, dass**
der Antrieb (5) der Schutzeinrichtung (1) durch einen Elektromotor erfolgt.

18. Verfahren nach einem der vorangehenden Ansprüche,
**dadurch gekennzeichnet, dass**
der Antrieb (5) der Schutzeinrichtung (1) durch einen Drehstrom-Asynchronmotor (5) erfolgt.

19. Verfahren nach einem der vorangehenden Ansprüche,
**dadurch gekennzeichnet, dass**
der Antrieb (5) der Schutzeinrichtung (1) durch einen Servomotor erfolgt.

20. Verfahren nach Anspruch 19,
**dadurch gekennzeichnet, dass**
der Drehstrom-Asynchronmotor (5) mit einem Frequenzumrichter betrieben wird.

21. Verfahren nach Anspruch 18 oder 20,
**dadurch gekennzeichnet, dass**
der Drehstrom-Asynchronmotor (5) und/oder der Frequenzumrichter durch eine übergeordnete Steuervorrichtung (6) gesteuert werden.

22. Verfahren nach Anspruch 20 oder 21,
**dadurch gekennzeichnet, dass**
der zu überwachende Parameter in dem Frequenzumrichter erfasst wird.

23. Verfahren nach einem der Ansprüche 17 bis 22,
**dadurch gekennzeichnet, dass**
das Abkoppeln des Antriebs (5) von der Energieversorgung durch Stromlos-Schalten des Motors (5) erfolgt.

24. Verfahren nach einem der Ansprüche 17 bis 23,
**dadurch gekennzeichnet, dass**
es sich bei dem überwachten Parameter um die Ist-Stromaufnahme des Motors (5) handelt.

25. Verfahren nach einem der vorangehenden Ansprüche,
**dadurch gekennzeichnet, dass**
die Schließgeschwindigkeit des trennenden Elements (4) in einem Bereich von 0,5 m/s bis 1,5 m/s liegt.
